# EUROPÄISCHE PATENTSCHRIFT

(11) **EP 3 189 567 B1**
(45) Veröffentlichungstag und Bekanntmachung des Hinweises auf die Patenterteilung: **18.09.2019**
(21) Anmeldenummer: 15770820.7
(22) Anmeldetag: 02.09.2015
(51) Int. Cl.: H02G 3/12

(54) **ANSCHLUSSEINHEIT**
CONNECTION UNIT
UNITÉ DE RACCORDEMENT

(30) Priorität: 02.09.2014 DE 102014217481
(43) Veröffentlichungstag der Anmeldung: 12.07.2017
(73) Patentinhaber: Fränkische Rohrwerke Gebr. Kirchner GmbH & Co. KG, 97486 Königsberg (DE)
(72) Erfinder: FALLER, Josef, A-9852 Gmünd (AT); STREIBEL, Jan, 97437 Haßfurt (DE); BAYER, Frank, 97486 Königsberg (DE)
(74) Vertreter: Weickmann & Weickmann PartmbB
(86) Internationale Anmeldenummer: PCT/EP2015/070027
(87) Internationale Veröffentlichungsnummer: WO 2016/034613

(56) Entgegenhaltungen:
- EP-A2- 2 333 923
- WO-A1-99/48171
- WO-A1-2008/023102
- DE-U1-202006 006 453
- DE-U1-202006 010 817
- DE-U1-202012 100 876
- US-A- 4 165 010

## Beschreibung

Die Erfindung betrifft eine zur Montage in einem Montagevolumen vorbestimmter Größe eines Bauwerks geeignete Anschlusseinheit, umfassend ein zur Aufnahme wenigstens eines Teils der Funktionselemente der Anschlusseinheit bestimmtes und als Gehäusetopf mit einer Topföffnung, einer umlaufenden Topfseitenwandung und einem Topfboden ausgebildetes Gehäuse, und einen Montagerahmen mit einer im Wesentlichen planaren Basisplatte, mittels derer die Anschlusseinheit an einer Fläche des Bauwerks befestigbar ist.

In der Gebäudetechnik nimmt nicht nur im allgemeinen, sondern auch in Privathaushalten, der Einsatz digitaler Datenübertragung ständig zu. In der Haustechnik gilt dies beispielsweise für die Bereiche der Steuerung von Heizungsanlagen und/oder von Jalousien und/oder der Beleuchtung. Aber auch Haushältsgeräte, beispielsweise Kühlschränke, können in solche Steuerungssysteme eingebunden werden. Daneben sind selbstverständlich aber auch die Bereiche Computer nebst den zugehörigen Peripheriegeräten, Unterhaltungselektronik und Telekommunikation zu nennen. In allen diesen Bereichen halten die Digitaltechnik und der Einsatz von Mikroprozessoren zunehmend Einzug. Dadurch ergibt sich die Möglichkeit, teils auch die Notwendigkeit, die jeweiligen Endgeräte nicht nur innerhalb der genannten Bereiche, sondern auch bereichsübergreifend miteinander zu vernetzen, um Daten zwischen den Endgeräten austauschen zu können.

Die Übertragung digitaler Daten kann sowohl kabellos, beispielsweise über elektromagnetische Wellen im Hochfrequenzbereich (RF), moduliert über sichtbares Licht oder im Infrarot-Bereich, als auch kabelgestützt, beispielsweise über Glas- oder Kunststoff-Lichtwellenleiter oder auch über Kupferkabel erfolgen. Verkabelungen können beispielsweise in einer Verrohrung zu Datenauslässen geführt werden. An die in dieser Verrohrung geführten Kabel können die gattungsgemäßen Anschlusseinheiten angeschlossen werden. Diese Anschlusseinheiten können beispielsweise in Unterputz- oder Aufputzdosen angeordnet werden, deren Innenraum das Montagevolumen vorbestimmter Größe bildet. Es ist aber auch möglich, und insbesondere beim Bau von Holzhäusern durchaus üblich, dass das Montagevolumen ohne das zusätzliche Vorsehen einer Montagedose allein von einer in einer Wandung des Bauwerks vorgesehene Ausnehmung gebildet wird.

Von den genannten Möglichkeiten der Datenübertragung ist die Datenübertragung über Lichtwellenleiter jene mit der größten Übertragungs- und Störsicherheit. Der Einsatz von Glas-Lichtwellenleitern (GOF - Glass Optical Fibers) ermöglicht zwar große Übertragungslängen, jedoch ist die Montage von Steckverbindungen und Anschlüssen aufwändig. Kunststoff-Lichtwellenleiter (POF - Plastic Optical Fiber), zu denen im Rahmen der vorliegenden Erfindung auch HPCF-Leitungen (Hard Polymer Clad Fiber) gezählt werden, ermöglichen zwar im Vergleich zu GOF-Leitungen nur kleinere Übertragungslängen, erlauben dafür jedoch den Einsatz einfacherer Anschlusstechnologien. Da die möglichen Übertragungslängen aber auch beim Einsatz von POF-Leitungen immerhin in der Größenordnung von 50 m bis 100 m liegen, hat sich in der Haustechnik die Verwendung von POF-Leitungen durchgesetzt. Diese POF-Leitungen können aufgrund der Tatsache, dass sie aus einem elektrisch nicht leitenden Material gefertigt sind, parallel zu den Netzleitungen (220 V bis 380 V) in einer gemeinsamen Verrohrung verlegt werden. Eine derartige gemeinsame Verlegung kann beispielsweise unter Einsatz des von der Anmelderin unter der Bezeichnung "FFKuS Datalight"® vertriebenen Rohrs verwirklicht werden.

Gemäß Vorstehendem ist die erfindungsgemäße Anschlusseinheit vorzugsweise Teil eines Netzwerks zur leitungsgestützten, digitalen Datenübertragung, insbesondere eines Netzwerks zur digitalen Datenübertragung mittels Lichtwellenleitern, beispielsweise POF-Leitungen.

Zur Ein- bzw. Auskopplung der Signale ist ein Datenkonverter bzw. Datenumsetzer erforderlich, der ein über den Lichtwellenleiter zugeführtes und an einem FOT (Fiber Optical Transceiver) eingehendes optisches Signal in ein elektrisches Signal konvertiert bzw. umsetzt und dieses elektrische Signal an einer oder mehreren Datenanschlussbuchsen oder über RF-Antennen (WLAN) zur Weiterleitung an ein digitales Endgerät bereitstellt bzw. der ein von einem digitalen Endgerät an einer Datenanschlussbuchse eingehendes elektrisches Signal in ein optisches Signal konvertiert bzw. umsetzt und dieses optische Signal an den FOT zur Weiterleitung über einen Lichtwellenleiter übergibt. Die Datenanschlussbuchsen können vorzugsweise dem RJ-Standard entsprechen (Registered Jack; auf deutsch: "genormte Buchse") und beispielsweise von RJ45-Anschlussbuchsen gebildet sein.

Da der Datenkonverter als Mikroprozessor ausgeführt ist, kann die Anschlusseinheit ferner ein Netzgerät umfassen, das die bauwerkseitig bereitgestellte elektrische Netzspannung in eine für den Datenkonverter geeignete Betriebsspannung umsetzt und den Datenkonverter mit Strom versorgt.

Ferner kann die Anschlusseinheit einen Datenrepeater bzw. Datenwiederholer umfassen, der ein eingehendes optisches Signal wiederum als optisches Signal an den FOT zur Weiterleitung im Datennetzwerk übergibt. Für Fachleute versteht es sich von selbst, dass die Funktionen des Datenkonverters und des Datenrepeaters auch in ein und demselben Mikroprozessor vereint sein können.

Wie sich aus den vorstehenden Erläuterungen ergibt, kann die gattungsgemäße Anschlusseinheit eine Mehrzahl von Bauteilen umfassen, beispielsweise erstens den FOT, über welchen optische Signale empfangen und versendet werden, zweitens einen Datenkonverter und gewünschtenfalls -repeater und/oder WLAM-Access Point, drittens üblicherweise zwei Datenanschlussbuchsen, beispielsweise RJ45-Anschlussbuchsen, und/oder RF-Antennen zur Weiterleitung der Signale an digitale Endgeräte bzw. zum Empfangen von Signalen von digitalen Endgeräten, und fünftens ein Netzgerät zur Versorgung des Datenkonverters/-repeaters. Man sieht leicht ein, dass ferner Peripherie-Elektronik vorgesehen sein muss, beispielsweise zur Spannungsstabilisierung, zur Absicherung der einzelnen Komponenten, insbesondere des Datenkonverters, vor Spannungsspitzen, zur Signalglättung und dergleichen mehr. Zudem ist darauf zu achten, dass der Datenkonverter aus Sicherheitsgründen einen ausreichenden Abstand von dem ihm zugeordneten Netzgerät haben muss, um ein "Übersprechen" zu verhindern. Ferner ist zu berücksichtigen, dass mit immer weiter steigenden Datenübertragungsraten (zum Zeitpunkt der Einreichung der vorliegenden Anmeldung: Größenordnung 1 Gbit/s) aufgrund der damit verbundenen erhöhten Anforderungen an die Arbeitsleistung der einzelnen Komponenten, insbesondere des Datenkonverters/-repeaters, auch die Größe dieser Komponenten zunimmt. All dies erschwert die Unterbringung aller Komponenten in dem Montagevolumen vorbestimmter Größe.

Ferner ist Folgendes zu berücksichtigen: Üblicherweise sind die Funktionselemente der Anschlusseinheit auf wenigstens drei Platinen angeordnet. Dabei sind auf der der Topföffnung nächstgelegenen Platine der FOT und die Anschlussbuchse bzw. die Anschlussbuchsen oder die RF-Antennen für digitale Endgeräte angeordnet, ist auf der benachbarten Platine der Datenkonverter/-repeater nebst der zugehörigen Peripherie-Elektronik angeordnet und ist auf der von der Topföffnung am entferntesten gelegenen Platine das für die Stromversorgung des Datenkonverter/-repeaters erforderliche Netzgerät nebst der zugehörigen Peripherie-Elektronik angeordnet.

Gemäß dem Stand der Technik wird die von diesen Platinen nebst den auf diesen angeordneten Funktionselementen gebildete Elektronikbaugruppe von oben durch die Topföffnung in den Gehäusetopf eingeführt. Daher ist die maximale Größe der Platinen durch die kleinste innere Querschnittsfläche des Gehäuses begrenzt, an der die Platinen vorbeibewegt werden müssen. Üblicherweise liegt diese bereits im Bereich des die Topföffnung definieren den Randes der Topfseitenwandung vor, nämlich dort, wo das Gehäuse in den Montagerahmen übergeht.

An dieser Stelle sei darauf hingewiesen, dass die vorstehend erwähnten Merkmale gattungsgemäßer Anschlusseinheiten mit Ausnahme der in dem unmittelbar vorhergehenden Absatz beschriebenen Merkmale alle auch bei den erfindungsgemäßen Anschlusseinheiten verwirklicht sein können.

In der DE 20 2006 006453 U1 ist eine Anschlusseinheit offenbart, bei welcher die Funktionselemente einer Elektronikbaugruppe in ein einteilig ausgebildetes Gehäuse eingesetzt sind und das Gehäuse in einer mehrteiligen Unterputzdose aufgenommen ist.

Ferner sei auf die DE 20 2012 100876 U1 sowie die US 4,165,010 A verwiesen.

Vor dem vorstehend erläuterten technologischen Hintergrund ist es Aufgabe der vorliegenden Erfindung, die Anschlusseinheit der gattungsgemäßen Art derart weiterzubilden, dass die Elektronikbaugruppe einfacher in dem Gehäuse angeordnet werden kann.

Diese Aufgabe wird erfindungsgemäß durch eine Anschlusseinheit der gattungsgemäßen Art gelöst, bei welcher der Gehäusetopf ein Gehäuse-Hauptteil und ein Gehäuse-Deckelteil umfasst, welche miteinander verbindbar sind, wobei die Trennlinie zwischen Gehäuse-Hauptteil und Gehäuse-Deckelteil von einem ersten Randabschnitt der Topföffnung ausgeht, durch einen ersten Abschnitt der Topfseitenwandung, anschließend durch den Topfboden und weiter anschließend durch einen zweiten Abschnitt der Topfseitenwandung verläuft und in einem zweiten Randabschnitt der Topföffnung endet.

Gemäß Vorstehendem umfassen somit sowohl das Gehäuse-Hauptteil als auch das Gehäuse-Deckelteil jeweils sowohl einen Teil der Topfseitenwandung als auch einen Teil des Topfbodens. Infolge dieser Zweiteilung des Gehäusetopfes in einer sowohl die Topföffnung als auch den Topfboden schneidenden, zu beiden vorzugsweise annähernd oder im Wesentlichen orthogonal verlaufenden Richtung können Funktionselemente der Anschlusseinheit bzw. die diese Funktionselemente tragenden Platinen in einer zur Topföffnung im Wesentlichen parallel verlaufenden Richtung in das Gehäuse-Hauptteil eingeführt und anschließend mittels des Gehäuse-Deckelteils abgedeckt werden, wobei der FOT und die Anschlussbuchse bzw. die Anschlussbuchsen für digitale Endgeräte aus der Topföffnung herausragen können. Dies vereinfacht die Montage und reduziert darüber hinaus auch die Herstellungskosten.

Darüber hinaus ist die Größe der Platinen erfindungsgemäß auch nicht mehr durch die Größe der Topföffnung am oberen Rand des Gehäusetopfes beschränkt. Vielmehr kann der Gehäusetopf hinterschnitten ausgebildet sein, mit einem für den Übergang in den Montagerahmen stabileren, insbesondere verdickt ausgebildeten, oberen Rand und einem aufgeweiteten Querschnitt im Bereich zwischen dem oberen Rand und dem Topfboden, was im Zusammenwirken mit der erfindungsgemäßen Zweiteilung des Gehäuses bei ansonsten gleichen Gehäuseabmessungen den Einsatz größerer Platinen ermöglicht als bei herkömmlichen Gehäusen.

Dieser Effekt kann beispielsweise dazu verwendet werden, die Funktionselemente mit größerem Abstand voneinander auf der auf den Platinen vorhandenen Fläche anzuordnen. Er kann aber auch dazu verwendet werden, das Gehäuse der Anschlusseinheit und somit die Anschlusseinheit insgesamt bei gleichbleibend kompakter Anordnung der Funktionselemente kleiner auszubilden.

Insbesondere die letztgenannte Möglichkeit bietet einen weiteren Vorteil:
Und zwar unterscheiden sich die in den verschiedenen Ländern üblichen Montagevolumina in ihrer Größe voneinander, und dies nicht nur hinsichtlich ihrer Querschnittsfläche, sondern auch hinsichtlich ihrer Tiefe. So weisen beispielsweise die in Deutschland üblichen Unterputzdosen zwar die gleiche Querschnittsfläche, manchmal aber größere Tiefe auf als die in Frankreich üblichen Unterputzdosen. Damit passt eine Anordnung aller Komponenten, die für das in einem ersten Land übliche Montagevolumen konzipiert wurde, nicht immer auch in das in einem zweiten Land übliche Montagevolumen. Daher muss für jedes Land eine gesonderte Anordnung der Komponenten konzipiert werden. Dies erhöht die Herstellungskosten, da für jedes Land jeweils nur kleinere Stückzahlen hergestellt und somit Skaleneffekte nicht ausgenutzt werden können.

Der vorstehend beschriebene Effekt ermöglicht, wie bereits erwähnt, eine kompaktere Anordnung der Funktionselemente der Anschlusseinheit, so dass es erfindungsgemäß möglich ist, die Anschlusseinheit auch in Montagedosen mit der kleinsten üblichen Querschnittsfläche anzuordnen. Dies wiederum ermöglicht es, ein und dieselbe Elektronikbaugruppe in mehreren Ländern einzusetzen. Der damit einhergehende Skaleneffekt wirkt sich günstig auf die Herstellungskosten der Elektronikbaugruppe und somit der Anschlusseinheit insgesamt aus.

In Ländern mit einer größeren üblichen Querschnittsfläche der Topföffnung ermöglicht die kompakte Anordnung der Funktionselemente der Anschlusseinheit deren exzentrische Anordnung in dem Montagevolumen, was es wiederum erlaubt, in dem Montagevolumen auch noch weitere Funktionseinheiten vorzusehen, beispielsweise eine Anschlusseinheit für Analog-Telefonie oder ein zusätzlicher FOT, insbesondere zur Errichtung einer so genannten "Daisy Chain", d.h. eines eine Mehrzahl von in Serie angeordneten Knotenpunkten umfassenden Netzwerks.

Die zusätzlichen Funktionseinheiten können entweder direkt am Gehäuse angebracht werden oder in die Abdeckung integriert fixiert werden. Um bei Kombination mit galvanischen Leitern eine ausreichende Sicherheitstrennung zur Niederspannungsversorgung zu gewährleisten, kann die jeweilige zusätzliche Funktionseinheit mit einer Trennwand versehen und über eine am Gehäuse ausgeformte Befestigungseinrichtung (Nut, Lasche oder Klammer) befestigt sein. Was den zusätzlichen FOT anbelangt, könnte dieser auch auf der obersten Platine angeordnet sein. In diesem Fall könnte ein separater Rahmen mit einem passenden Ausschnitt verwendet werden.

Um die Elektronikbaugruppe in einfacher Weise in das Gehäuse-Hauptteil einführen und dort lagestabil halten zu können, ist an dem Gehäuse-Hauptteil wenigstens ein Paar von, zur Trennlinie im Wesentlichen orthogonal verlaufenden, Führungsschienen vorgesehen. Die Führungsschienen wirken mit einer Platine der Elektronikbaugruppe zusammen. Insbesondere kann jede der Führungsschienen von zwei Begrenzungsstegen gebildet sein, zwischen denen ein Randabschnitt einer Platine der Elektronikbaugruppe geführt ist. Zur Erzielung einer besonders großen Lagestabilität der Elektronikbaugruppe in dem Gehäuse kann vorteilhafterweise für wenigstens zwei Platinen, vorzugsweise für alle Platinen, der Elektronikbaugruppe ein gesondertes Führungsschienenpaar vorgesehen sein.

Beispielsweise kann für eine Mehrzahl von Platinen, vorzugsweise für alle Platinen, der Elektronikbaugruppe der Anschlusseinheit, jeweils ein Paar von Führungsschienen vorgesehen sein.

Grundsätzlich ist es denkbar, dass auch im Gehäuse-Deckelteil wenigstens ein zu dem wenigstens einen Führungsschienenpaar des Gehäuse-Hauptteils korrespondierendes Führungsschienenpaar vorgesehen ist. Reicht die von dem wenigstens einen Führungsschienenpaar des Gehäuse-Hauptteils bereitgestellte Lagestabilität bereits aus, so kann zur Vereinfachung des Aufbaus des Gehäuse-Deckelteils in diesem aber auch auf jedwede Führungsschiene verzichtet werden. In diesem Fall hat das Gehäuse-Deckelteil lediglich die Aufgabe, den Gehäusetopf abzuschließen und so die Elektronikbaugruppe zuverlässig und lagestabil in dem Gehäusetopf zu halten.

In beiden Fällen ist es zur Gewährleistung des Halts der Elektronikbaugruppe in dem Gehäusetopf vorteilhaft, wenn der dem Gehäuse-Deckelteil angehörende Abschnitt des die Topföffnung begrenzenden Gehäuserands zumindest abschnittsweise zumindest auf Höhe, vorzugsweise oberhalb, der Führungsschienen bzw. der der Topföffnung nächstgelegenen Führungsschienen verläuft.

Um die Elektronikbaugruppe, beispielsweise zum Zwecke der Reparatur oder der Vornahme von Einstellungen an einem Schalterbaustein, aus dem Gehäuse entnehmen zu können, wird in Weiterbildung der Erfindung vorgeschlagen, dass das Gehäuse-Hauptteil und das Gehäuse-Deckelteil lösbar aneinander befestigbar, beispielsweise miteinander verrastbar, sind.

Um einen sicheren Halt des Gehäuse-Deckelteils an dem Gehäuse-Hauptteil gewährleisten zu können, kann vorgesehen sein, dass von einem der beiden Teile, nämlich dem Gehäuse-Deckelteil oder dem Gehäuse-Hauptteil, vorzugsweise dem Gehäuse-Deckelteil, wenigstens ein Steg absteht, der im aneinander befestigten Zustand von Gehäuse-Hauptteil und Gehäuse-Deckelteil einem Abschnitt der Seitenwandung des jeweils anderen der beiden Teile, nämlich des Gehäuse-Hauptteils oder dem Gehäuse-Deckelteils, vorzugsweise des Gehäuse-Hauptteils, gegenüberliegt, vorzugsweise an diesem flächig anliegt, wobei an dem wenigstens einen Steg und dem diesem zugeordneten Seitenwandungsabschnitt miteinander zusammenwirkende Rastmittel ausgebildet sind. Dabei können die miteinander zusammenwirkenden Rastmittel beispielsweise eine an dem Steg ausgebildete Rastnase und eine in dem Wandungsabschnitt ausgebildete Rastausnehmung umfassen. Ferner kann die Rastnase beispielsweise an einer elastisch auslenkbaren Lasche des Stegs vorgesehen sein.

Zur weiteren Verbesserung des sicheren Halts des Gehäuse-Deckelteils an dem Gehäuse-Hauptteil wird vorgeschlagen, dass der wenigstens eine Steg des einen Teils, Gehäuse-Deckelteil oder Gehäuse-Hauptteil, im aneinander befestigten Zustand von Gehäuse-Hauptteil und Gehäuse-Deckelteil zumindest mit einem Teil seiner Länge in eine Halterungstasche eingeführt ist, welche an dem Wandungsabschnitt des jeweils anderen Teils, Gehäuse-Hauptteil oder Gehäuse-Deckelteil, vorgesehen ist. Dabei kann die Halterungstasche von einem Teil des Seitenwandungsabschnitts, dem der Steg gegenüberliegt, zwei der Führungen für die Elektronikbaugruppe und einer zum Seitenwandungsabschnitt parallel verlaufenden Wandung umgrenzt sein, so dass der Steg in der Halterungstasche allseitig gehalten ist.

Grundsätzlich ist es denkbar, dass der Montagerahmen mit dem Gehäuse-hauptteil oder dem Gehäuse-Deckelteil, vorzugsweise mit dem Gehäuse-Hauptteil, einstückig ausgebildet ist. Auch in diesem Fall lassen sich die gewünschten Skaleneffekte erzielen, da die Herstellungskosten der erfindungsgemäßen Anschlusseinheit zum größten Teil durch die Herstellungskosten der Elektronikbaugruppe bedingt sind.

Erfindungsgemäß wird jedoch vorgeschlagen, dass der Montagerahmen als von dem Gehäuse gesondert ausgebildetes, mit diesem lösbar verbindbares Bauteil ausgebildet ist, wobei der Montagerahmen eine Basisplatte umfasst, welche dazu bestimmt ist, im montierten Zustand der Anschlusseinheit zur Wand im Wesentlichen parallel zu verlaufen, sowie eine mit der Basisplatte einstückig ausgebildete und von der Basisplatte abstehende Halterung, mittels derer der Montagerahmen mit dem Gehäuse verbindbar, vorzugsweise lösbar verbindbar, beispielsweise verrastbar, ist.
Gemäß dieser Ausbildung kann nämlich die Elektronikbaugruppe nebst dem zugehörigen Gehäuse als vorgefertigte Baueinheit bereitgestellt werden und braucht erst kurz vor dem tatsächlichen Einbau mit einem zur bauwerkseitig vorgesehenen Montagedose passenden Montagerahmen komplettiert zu werden. Dies hat unter anderem den Vorteil, dass die Elektronikbaugruppe in einem durch das Gehäuse geschützten Zustand auf die Baustelle geliefert werden kann.

Analog zu den Rastmitteln der Gehäuseteile, kann auch der Montagerahmen über entsprechende Rastmittel mit dem Gehäuse verbindbar ausgebildet sein. Umfasst der Montagerahmen beispielsweise eine oder mehrere Rastausnehmungen, können diese als Durchgangsöffnungen durch die Halterung des Montagerahmens ausgebildet sein. Um eine hohe Stabilität gegen Deformation im Bereich der Rastausnehmungen zu erreichen, kann es jedoch bevorzugt sein, dass die Rastausnehmungen als nichtdurchgängige Vertiefungen in der Halterung ausgebildet sind. Vorteilhafterweise können sich die Vertiefungen von einer Innenseite des Halters des Montagerahmens in Richtung dessen Außenseite erstrecken.

Da der Gedanke eines von dem Gehäuse gesondert ausgebildeten und mit diesem verbindbaren Montagerahmens auch dann mit Vorteil eingesetzt werden kann, wenn das Gehäuse einstückig ausgebildet ist, wird für diesen Gedanken von der Zweiteilung des Gehäuses unabhängiger Schutz angestrebt.

Um ein und denselben Montagerahmen sowohl für Montagedosen großer Tiefe als auch für Montagedosen geringer Tiefe verwenden zu können, kann ferner vorgesehen sein, dass die Halterung derart ausgebildet ist, dass der Montagerahmen mit dem Gehäuse sowohl dann lösbar verbindbar ist, wenn er derart orientiert ist, dass die Halterung auf derjenigen Seite der Basisplatte angeordnet ist, die vom Gehäuse weg weist, als auch dann, wenn er derart orientiert ist, dass die Halterung auf derjenigen Seite der Basisplatte angeordnet ist, die auf das Gehäuse zu weist. Im Falle der Rastverbindung von Montagerahmen und Gehäuse kann dies beispielsweise dadurch erzielt werden, dass die Rastausnehmung sowohl an ihrer der Basisplatte zugewandten Seite als auch an ihrer von der Basisplatte abgewandten Seite mit einer mit der Rastnase zusammenwirkenden Rastfläche ausgebildet ist.

Ist der Montagerahmen derart orientiert, dass die Halterung auf derjenigen Seite der Basisplatte angeordnet ist, die vom Gehäuse weg weist, so befindet sich die Basisplatte um einen vorbestimmten Abstand unterhalb des Randes der Topfseitenwandung, d.h. unterhalb der Topföffnung. Dadurch ist das Gehäuse in dem im vorbestimmten Montagevolumen montierten Zustand der erfindungsgemäßen Anschlusseinheit um diesen vorbestimmten Abstand aus dem vorbestimmten Montagevolumen herausgehoben angeordnet. Dies ermöglicht es, die erfindungsgemäße Anschlusseinheit auch in Montagevolumen geringerer Tiefe anzuordnen.

Wie dies aus dem Stand der Technik an sich bekannt ist, kann die Basisplatte wenigstens zwei Öffnungen umfassen, welche beispielsweise für den Durchtritt von Schrauben bestimmt sind, mittels derer die Anschlusseinheit an der Wand des Bauwerks befestigt werden kann. Diese Öffnungen sind vorzugsweise in Stegen der Basisplatte vorgesehen, welche in dem an dem Gehäuse befestigten Zustand des Montagerahmens die Topföffnung umgebend angeordnet sind.

Zur Ermöglichung einer exzentrischen Anordnung der Anschlusseinheit in dem Montagevolumen, insbesondere um durch eine derartige exzentrische Anordnung den Vorteil der Ermöglichung des Vorsehens wenigstens einer weiteren Funktionseinheit erzielen zu können, wird vorgeschlagen, dass wenigstens einer der Stege der Basisplatte schmaler ausgebildet ist als ein auf der entgegengesetzten Seite der Topföffnung vorgesehener Steg.

Alternativ ist es jedoch auch denkbar, dass die Basisplatte im Wesentlichen U-förmig ausgebildet ist oder mit anderen Worten lediglich drei Hufeisenförmig angeordnete Stege umfasst. Die letztgenannte Alternative hat überdies den Vorteil einer verbesserten Zugänglichkeit zu im Bereich des fehlenden vierten Stegs angeordneten Funktionselementen der Elektronikbaugruppe, beispielsweise zu dem FOT, insbesondere um deren Verbindung mit den POF-Leitungen zu erleichtern.

Ferner ist es auch denkbar, dass wenigstens einer der Stege entfernbar oder/und verlagerbar sein kann. Im Falle der im Wesentlichen U-förmig ausgebildeten Basisplatte kann beispielsweise eine getrennt von der Basisplatte ausgebildete Strebe mit der Basisplatte verbindbar sein. Dabei kann die Strebe eine Durchtrittsöffnung aufweisen, so dass über die Strebe auch im Bereich des fehlenden Stegs der U-förmigen Basisplatte die Anschlusseinheit an die Wand des Bauwerks befestigt werden kann. Eine derartige Ausgestaltung kann es ermöglichen, dass die Basisplatte sowohl eine hohe Steifigkeit aufweisen kann als auch die Zugänglichkeit zu im Bereich des entfernbaren Stegs angeordneten Funktionselementen der Elektronikbaugruppe entsprechend der oben beschriebenen Ausführungsform verbessert sein kann.

Der Montagerahmen kann aus einem metallischen Werkstoff, wie beispielsweise einer sogenannten "Zamak-Legierung", welche insbesondere zur Verwendung im Zinkdruckgussverfahren geeignet ist, hergestellt sein. Üblicherweise setzt sich die Bezeichnung "Zamak" aus den Initialen der Legierungsbestandteile zusammen: **Z**ink **A**luminium **M**agnesium **K**upfer.

Im Fall einer Aufteilung des Gehäuses in einen Gehäuse-Hauptteil und einen Gehäuse-Deckelteil kann die Aufteilung derart ausgebildet sein, dass eines der beiden Gehäuseteile von dem anderen entfernt werden kann, ohne dass der Montagerahmen demontiert werden muss. Somit kann die Elektronikbaugruppe zumindest teilweise aus dem Gehäuse entfernbar sein, selbst wenn der Montagerahmen in seinem montierten Zustand verbleibt.

In einer weiteren Ausführungsform der Anschlusseinheit kann der Montagerahmen ferner eine Wärmeabführvorrichtung umfassen, welche in montiertem Zustand des Montagerahmens direkt oder unter Verwendung eines Zwischenelements, vorzugsweise unter Verwendung eines Wärmeleitpads, mit wenigstens einem wärmeerzeugenden Bauteil der Elektronikbaugruppe der Anschlusseinheit in wärmeübertragendem Kontakt steht. Die von der Wärmeabführvorrichtung aufgenomme Wärme kann beispielsweise über die Basisplatte des Montagerahmens und von dort weiter an die Umgebung oder/und an eine angrenzende Wand abgeführt werden. Das Wärmeleitpad kann z.B. ein vorgefertigtes Pad sein, welches beispielsweise aus einem Metall, aus Silikon oder aus einem thermoplastischen Material hergestellt ist. Alternativ kann das Wärmeleitpad auch erst durch Aufbringen eines Wärmeleitmaterials, insbesondere einer Wärmeleitpaste, erzeugt werden.

Wie es aus der Elektronik allgemein bekannt ist, kann auch hier die Wärmeabführ von einem wärmeerzeugenden Bauteil über eine Wärmeabführvorrichtung erfolgen, welche auf der gleichen Seite einer entsprechenden Platine angeordnet ist wie das wärmeerzeugende Bauteil oder/und über eine Wärmeabführvorrichtung, welche auf der gegenüberliegenden Seite einer entsprechenden Platine angeordnet ist wie das wärmeerzeugende Bauteil, beispielsweise unter Verwendung von Heatpipes oder/und Thermo-Vias.

Zusätzlich zu den oben erwähnten Merkmalen kann die Anschlusseinheit, insbesondere der Montagerahmen, eine Vorrichtung zur elektromagnetischen Abschirmung umfassen. Vorteilhafterweise kann die Vorrichtung zur elektromagnetischen Abschirmung dabei wenigstens ein sogenanntes "EMI-Gasket" umfassen. Derartige EMI-Gaskets können an Stellen, an denen es einer Verbesserung der elektromagnetischen Abschirmung bedarf, angebracht, z.B. aufgeklebt, werden. Die Vorrichtung zur elektromagnetischen Abschirmung kann durch geeignete Anbringung eine elektromagnetische Strahlung in das oder aus dem Gehäuse verringern oder sogar unterbinden. Im Fall der erfindungsgemäßen Anschlusseinheit haben Testreihen ergeben, dass insbesondere eine elektromagnetische Abschirmung von Bauteilen der Elektronikbaugruppe nach außen die Verwendung der erfindungsgemäßen Anschlusseinheit verbessern kann.

Um, wie voranstehend beschrieben, die Anforderungen an unterschiedliche Einbausituationen, z.B. bezüglich der Einbautiefe der Anschlusseinheit, erfüllen zu können, kann es vorteilhaft sein, eine Mehrzahl von mit dem Gehäuse verbindbaren, alternativen Montagerahmen vorzusehen, welche sich insbesondere in der Anordnung der Basisplatte des Montagerahmens in Relation zu den Rastmitteln des Montagerahmens und/oder der Wärmeabführvorrichtung des Montagerahmens unterscheiden.

Die Erfindung wird im Folgenden anhand der beigefügten Zeichnung an Ausführungsbeispielen näher erläutert werden. Es stellt dar:
- Figur 1: eine perspektivische Ansicht einer erfindungsgemäßen Anschlusseinheit;
- Figur 2: eine perspektivische Ansicht des Gehäuses der Anschlusseinheit gemäß Figur 1;
- Figur 3: eine perspektivische Ansicht des Gehäuse-Hauptteils und des Gehäuse-Deckelteils des Gehäuses gemäß Figur 2;
- Figur 4: eine perspektivische Explosionsansicht der Elektronikbaugruppe der Anschlusseinheit gemäß Figur 1;
- Figur 5: eine perspektivische Ansicht des Montagerahmens der Anschlusseinheit gemäß Figur 1;
- Figuren 6 und 7: zwei Ansichten zur Erläuterung der Verbindung des Montagerahmens mit dem Gehäuse, welche die Anordnung der erfindungsgemäßen Anschlusseinheit in Montagedosen unterschiedlicher Abmessungen, insbesondere unterschiedlicher Tiefe, ermöglichen;
- Figur 8: eine Ansicht, welche die exzentrische Anordnung der erfindungsgemäßen Anschlusseinheit in einer Montagedose und den dadurch entstehenden Bauraum für zusätzliche Funktionseinheiten zeigt;
- Figuren 9 bis 11: Draufsichten weiterer Ausführungsformen von Montagerahmen;
- Figur 12: eine Explosionsansicht einer weiteren Ausführungsform der Anschlusseinheit;
- Figur 13: eine weitere Ausführungsform des in Figur 12 gezeigten Montagerahmens.

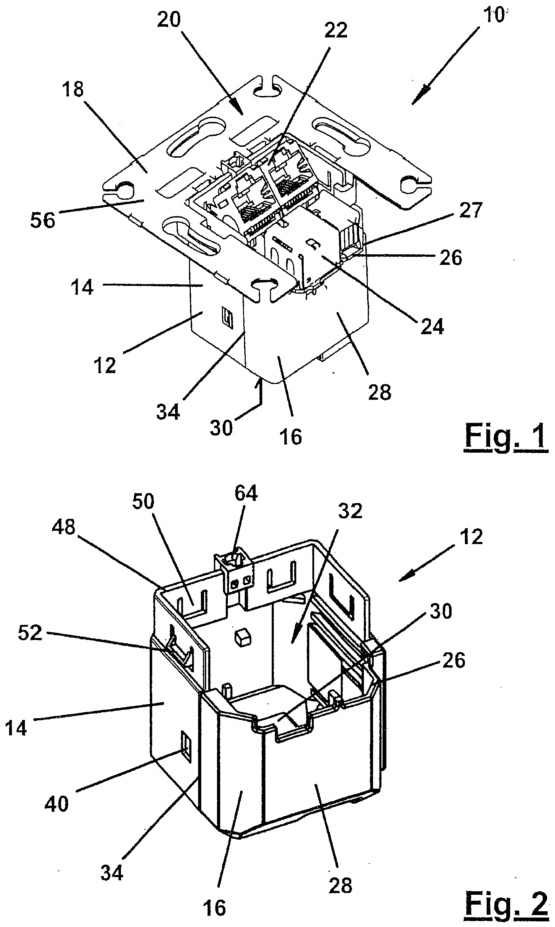

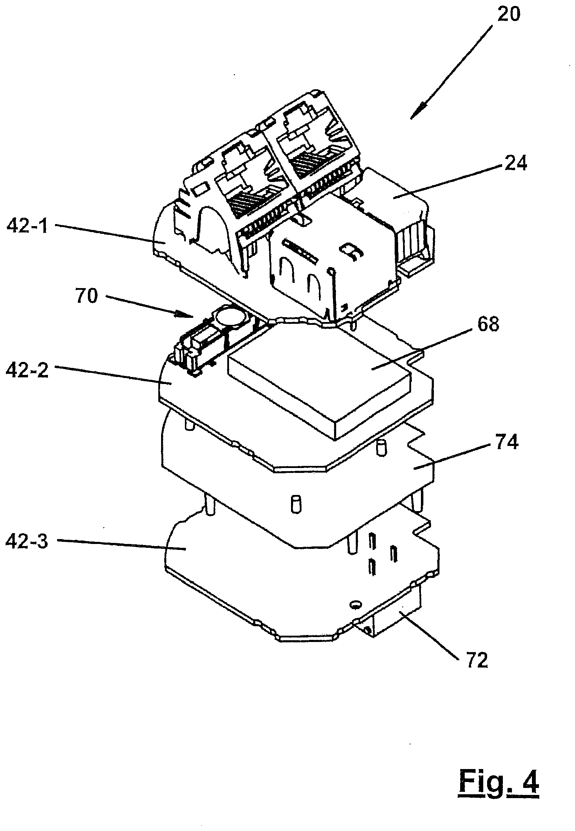

In Figur 1 ist eine erfindungsgemäße Anschlusseinheit ganz allgemein mit 10 bezeichnet. Sie umfasst ein Gehäuse 12, das aus einem Gehäuse-Hauptteil 14 und einem Gehäuse-Deckelteil 16 zusammengesetzt ist, einen Montagerahmen 18, der mit dem Gehäuse-Hauptteil 14 verbunden ist, und eine Elektronikbaugruppe 20, die in dem Topf-förmigen Gehäuse 12 aufgenommen ist. Von der Elektronikbaugruppe 20 sind in Figur 1 lediglich die beiden RJ45-Anschlussbuchsen 22 und der FOT 24 zu sehen, während die anderen Komponenten der Elektronikbaugruppe 20, die in dem Gehäuse 12 angeordnet sind, von diesem verdeckt sind. Diesbezüglich sei bereits an dieser Stelle auf die Beschreibung der Figur 4 verwiesen.

An einen in Figur 2 oberen Topfrand 26 schließt sich eine Topfseitenwandung 28 an, die zusammen mit dem Topfboden 30 einen Aufnahmeraum 32 des Gehäuses 12 umschließt. Um ein seitliches Einführen der Elektronikbaugruppe 20 in den Aufnahmeraum 32 ermöglichen zu können, ist das Gehäuse 12 längs einer Trennlinie 34 in das Gehäuse-Hauptteil 14 und das Gehäuse-Deckelteil 16 unterteilt. Von einem ersten Abschnitt des Topfrands 26 ausgehend verläuft die Trennlinie 34 durch einen ersten Abschnitt der Topfseitenwandung 28, anschließend durch den Topfboden 30 und weiter anschließend durch einen zweiten Abschnitt der Topfseitenwandung 28, bevor sie in einem zweiten Abschnitt des Topfrands 26 endet. Der Topfrand 26 umschließt eine Topföffnung 27.

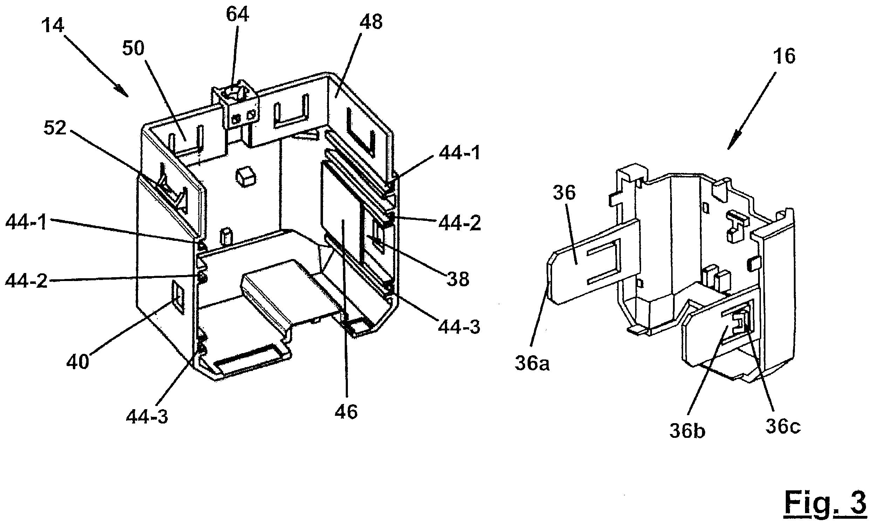

Um die Elektronikbaugruppe 20 nach deren Einführen in den Aufnahmeraum 32 dort sicher halten zu können, sind das Gehäuse-Hauptteil 14 und das Gehäuse-Deckelteil 16 aneinander verrastbar ausgebildet. Hierzu stehen von dem Gehäuse-Deckelteil 16 zwei Stege 36 ab (siehe Figur 3), die in dem verbundenen Zustand von Gehäuse-Hauptteil 14 und Gehäuse-Deckelteil 16 seitlich an einem dem Gehäuse-Hauptteil 14 zugehörigen Abschnitt der Topfseitenwandung 28 anliegen und mit ihren freien Enden 36a in am Gehäuse-Hauptteil 14 ausgebildete Aufnahmetaschen 38 einführbar sind. An in den Stegen 36 ausgebildeten, elastisch auslenkbaren Laschen 36b sind Rastnasen 36c vorgesehen, welche im verrasteten Zustand von Gehäuse-Hauptteil 14 und Gehäuse-Deckelteil 16 in Rastausnehmungen 40 des Gehäuse-Hauptteils 14 eingreifen.

Wie in Figur 4 dargestellt ist, umfasst die Elektronikbaugruppe 20 insgesamt drei Platinen 42-1, 42-2 und 42-3, auf denen die Funktionselemente der Anschlusseinheit 10 angeordnet sind. Gemäß Figur 3 ist für jede dieser Platinen 42-1, 42-2 und 42-3 in dem Gehäuse-Hauptteil 14 ein Führungsschienenpaar 44-1 bzw. 44-2 bzw. 44-3 vorgesehen. Die Führungsschienenpaare 44-1, 44-2 und 44-3 erleichtern das Einführen der Platinen 42-1, 42-2 und 42-3 und damit der gesamten Elektronikbaugruppe 20 in den Aufnahmeraum 32 und halten diese nach dem Zusammenführen von Gehäuse-Hauptteil 14 und Gehäuse-Deckelteil 16 sicher in dem von diesen gebildeten Gehäuse 12. In dem dargestellten Ausführungsbeispiel bilden die beiden unteren Führungsschienenpaare 44-2 und 44-3 zugleich die oberen und unteren Begrenzungen der Aufnahmetaschen 38 für die Stege 36. Ferner werden die Aufnahmetaschen 38 von der Topfseitenwandung 28 und einer Deckfläche 46 begrenzt, so dass die Stege 36 mit enger Passung gehalten werden.

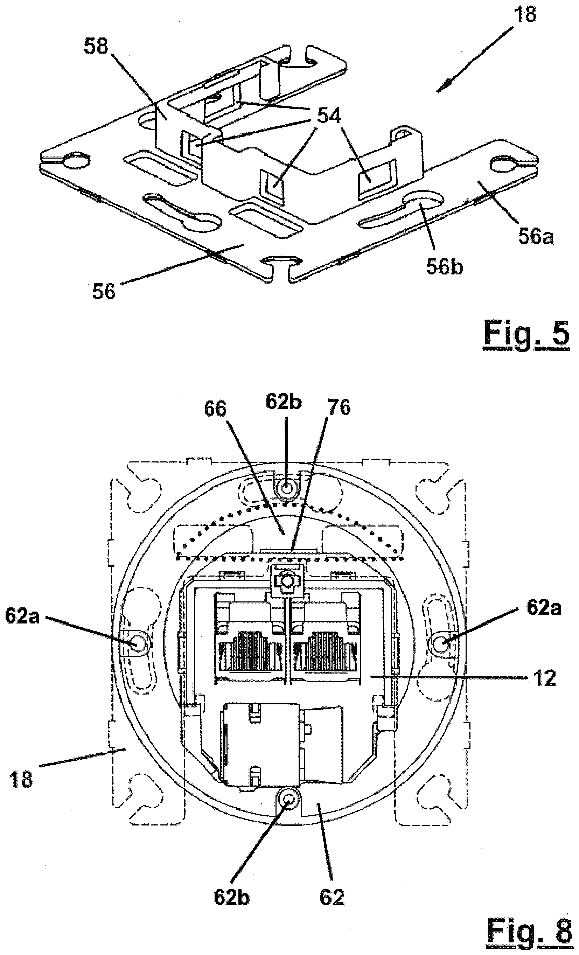

An seinem in den Figuren 2 und 3 oberen Rand verfügt das Gehäuse-Hauptteil 14 über einen Ansatz 48, der zur Verbindung des Gehäuses 12 mit dem Montagerahmen 18 bestimmt ist. Hierzu sind in dem Ansatz 48 elastisch auslenkbare Laschen 50 ausgebildet, an denen Rastnasen 52 vorgesehen sind. Im verrasteten Zustand von Gehäuse 12 und Montagerahmen 18 greifen diese Rastnasen 52 in Rastausnehmungen 54 (siehe Figur 5) des Montagerahmens 18 ein.

Der Montagerahmen 18 umfasst gemäß Figur 5 eine Basisplatte 56 sowie eine von der Basisplatte 56 im wesentlichen orthogonal abstehende Halterung 58, in der die Rastausnehmungen 54 ausgebildet sind. In dem in Figur 5 dargestellten Ausführungsbeispiel ist die Basisplatte 56 im wesentlichen U-förmig ausgebildet. Insbesondere umfasst sie drei Stege 56a, die die U-Form bilden und in denen Öffnungen 56b vorgesehen sind, wobei diese Öffnungen 56b zum Durchtritt von (nicht dargestellten) Befestigungsschrauben dienen, mittels derer die Anschlusseinheit 10 an einer (ebenfalls nicht dargestelten) Wandung des Bauwerks befestigt werden kann.

Gemäß einer vorteilhaften Ausgestaltung der Erfindung sind die Rastausnehmungen 54 derart ausgebildet, dass der Montagerahmen 18 sowohl in der in Figur 5 dargestellten Orientierung als auch in der in Figur 1 dargestellten Orientierung mit dem Gehäuse-Hauptteil 14 verbunden werden kann.

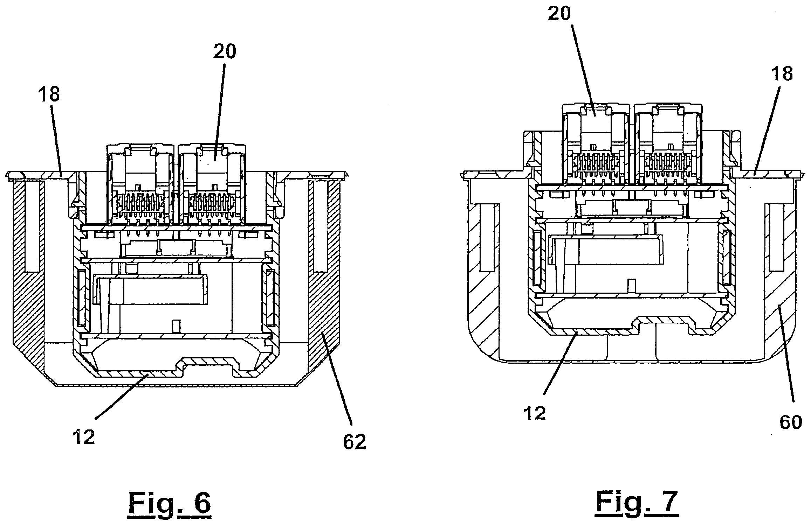

Wie man durch einen Vergleich der Figuren 6 und 7 erkennt, wird das Gehäuse 12 bei Anwendung der erstgenannten und in Figur 5 dargestellten Orientierung aus der dazugehörigen Montagedose 60 herausgehoben (siehe Figur 6), so dass es nicht so tief in diese eingreift, während es in der letztgenannten und in Figur 1 dargestellten Orientierung vollständig in die zugehörige Montagedose 62 eingesetzt ist (siehe Figur 7). In der erstgenannten Orientierung des Montagerahmens 18 kann die erfindungsgemäße Anschlusseinheit 10 somit auch in Verbindung mit Montagedosen 60 verwendet werden, deren Tiefe t geringer ist als die Höhe h des Gehäuses 12.

Wiederum mit Bezug auf die Figuren 2 und 3 erkennt man, dass das Gehäuse 12, insbesondere das Gehäuse-Hauptteil 14, hinterschnitten ausgebildet ist. Auf diese Weise kann zum einen die Verbindung zwischen dem Ansatz 48 und dem Montagerahmen 18 stabil ausgebildet werden. Zum anderen wird die hinterschnittene Ausbildung aber auch durch eine Aufnahme 64 bedingt, in der eine (nicht dargestellte) Mutter angeordnet ist. Diese Mutter dient nach der Montage der Anschlusseinheit 10 in der Montageausnehmung des Bauwerks zur Befestigung einer (nicht dargestellten) Abdeckung mittels einer Befestigungsschraube, die mit der Mutter in Schraubeingriff tritt.

Die Zweiteilung des Gehäuses 12 in Gehäuse-Hauptteil 14 und Gehäuse-Deckelteil 16 und das dadurch ermöglichte seitliche Einführen der Elektronikbaugruppe 20 in den Aufnahmeraum 32 des Gehäuses 12 erlaubt es, die Platinen 42-1, 42-2 und 42-3 mit einer größeren Querschnittsfläche auszubilden als die Topföffnung 27. Dies ermöglicht es unter Beibehaltung der kompakten Anordnung der Funktionselemente der Elektronikbaugruppe 20, das Gehäuse 12 insgesamt mit kleineren Abmessungen auszubilden, als dies bislang im Stand der Technik möglich war.

Diese kompaktere Anordnung kann, wie in Figur 8 dargestellt ist, beispielsweise dazu genutzt werden, das Gehäuse 12 in der Montagedose 60 bzw. 62 exzentrisch anzuordnen, d.h. es mit einer seiner Seiten der umlaufenden Wandung der Montagedose derart benachbart anzuordnen, dass auf seiner entgegengesetzten Seite ein Bauraum 66 vorhanden ist, der vorzugsweise zur Aufnahme wenigstens einer weiteren Funktionseinheit genutzt werden kann, beispielsweise zur Aufnahme einer Anschlusseinheit für Analog-Telefonie. Dieser Bauraum 66 ist in Figur 8 grob schematisch durch eine gestrichelte Linie angedeutet. Zur Befestigung der weiteren Funktionseinheit kann an der Außenseite des Gehäuses 12 wenigstens eine Befestigungstelle 76 vorgesehen sein. Zusätzlich oder alternativ kann auch am Montagerahmen 18 wenigstens eine derartige Befestigungsstelle vorgesehen sein.

Eine Folge der vorstehend beschriebenen exzentrischen Anordnung des Gehäuses 12 in der Montagedose 62 ist, dass der FOT 24 der umlaufenden Wandung der Montagedose 62 benachbart angeordnet ist. Um gleichwohl den Anschluss der POF-Leitungen an den FOT 24 in einfacher Weise ermöglichen zu können oder mit anderen Worten eine gute Zugänglichkeit des FOTs 24 gewährleisten zu können, ist die Basisplatte 56 des Montagerahmens 18, wie vorstehend insbesondere mit Bezug auf Figur 5 beschrieben, im Wesentlichen U-förmig ausgebildet, wobei der FOT 24 in der offenen Seite der U-Form angeordnet ist (siehe Figur 8).

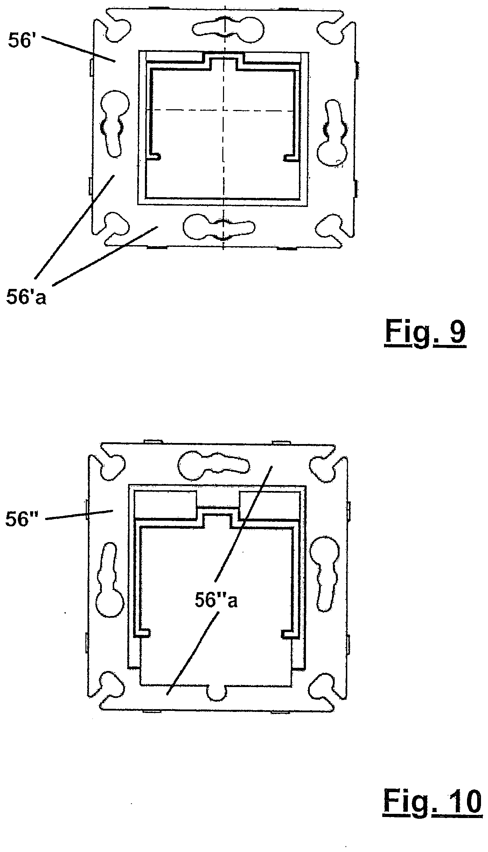

Ist die Anordnung weiterer Funktionseinheiten in der Montagedose 62 nicht erforderlich, so kann auch ein Montagerahmen 18' für die zentrische Anordnung des Gehäuses 12 in der Montagedose 60 verwendet werden, wie er in Figur 9 dargestellt ist. Dieser Montagerahmen 18' verfügt über eine Basisplatte 56' mit vier im Wesentlichen identisch ausgebildeten Stegen 56'a, die in einer im Wesentlichen quadratischen Anordnung vorgesehen sind. Alternativ ist es jedoch auch möglich, einen Montagerahmen 18" für eine leicht exzentrische Anordnung des Gehäuses 12 zu verwenden, wie er in Figur 10 dargestellt. Die Basisplatte 56" dieses Montagerahmens 18" verfügt zwar ebenfalls über vier Stege 56"a in einer im Wesentlichen quadratischen Anordnung. Jedoch ist einer der Stege 56"a dünner ausgebildet als die anderen Stege 56"a.

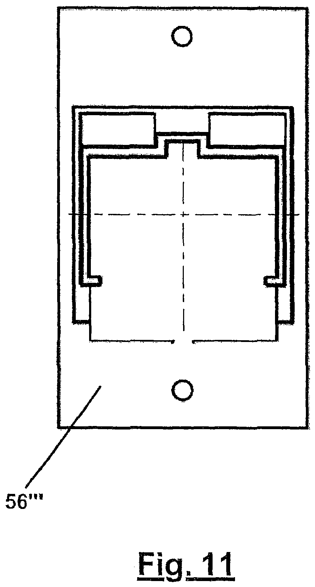

Schließlich ist es, insbesondere im Hinblick auf eine Anwendung in den U.S.A., auch denkbar, einen Montagerahmen 18'" mit einer im Wesentlichen rechteckig ausgebildeten Basisplatte 56'" zu verwenden, wie er in Figur 11, dargestellt ist.

Unter nochmaligem Bezug auf die Figur 4 umfasst die Elektronikbaugruppe 20, wie vorstehend bereits erwähnt drei Platinen 42-1, 42-2 und 42-3. Dabei sind auf der in Figur 4 obersten Platine 42-1 die beiden RJ45-Anschlussbuchsen 22 und der FOT 24 angeordnet, während auf der mittleren Platine 42-2 ein Datenkonverter und gegebenenfalls -repeater 68 und dessen Peripherie-Elektronik 70 und auf der untersten Platine 42-3 das für die Stromversorgung der genannten Bauteile erforderliche Netzgerät 72 nebst zugehöriger Peripherie-Elektronik (nicht dargestellt) angeordnet sind. Zwischen den Platinen 42-2 und 42-3 ist zudem ein Abstandhalter 74 angeordnet, dessen Aufgabe es ist, jedwede Störung des Datenkonverters/-repeaters 68 durch das Netzgerät 72 zuverlässig zu verhindern.

Nachzutragen ist noch, dass sich die im Rahmen der vorstehenden Beschreibung zur Bezeichnung von Orientierungen und/oder Richtungen verwendeten Begriffe, beispielsweise "oben", "unten", "seitlich" usw., auf eine Orientierung des Gehäuses 12 beziehen, in der dieses mit im Wesentlichen horizontal verlaufendem Topfboden 30 und im Wesentlichen vertikal verlaufender Topfseitenwandung 28 angeordnet ist, da dies die bei der Fertigung der Anschlusseinheit 10 übliche Orientierung ist. Gleichwohl versteht es sich, dass das Gehäuse 12 in der gängigen Einbausituation in dem Montagevolumen eines Bauwerks üblicherweise mit im Wesentlichen vertikal verlaufendem Topfboden 30 und im Wesentlichen horizontal verlaufender Topfseitenwandung 28 angeordnet ist.

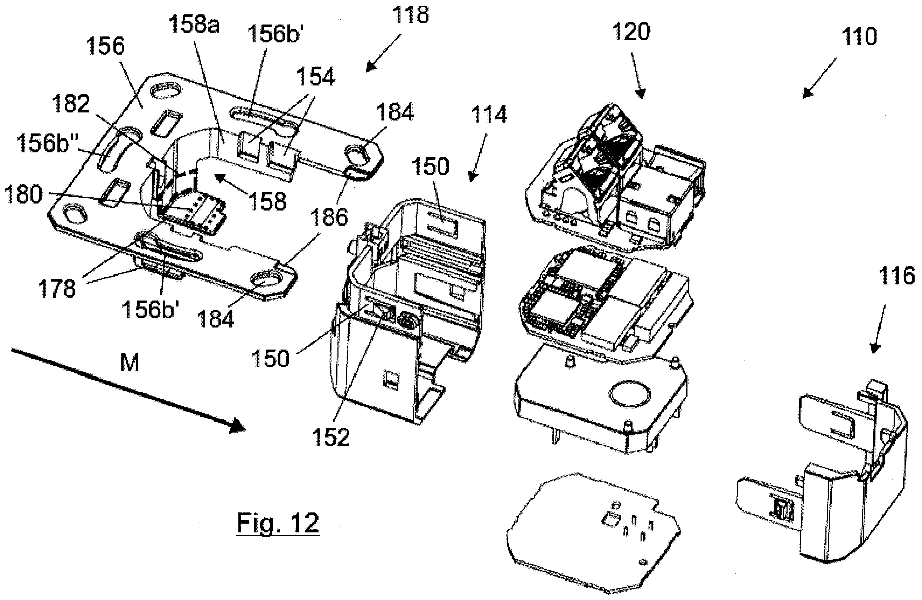

Die in Figur 12 dargestellte Ausführungsform der Anschlusseinheit 110 unterscheidet sich von den in den Figuren 1 bis 11 dargestellten Ausführungsbeispielen der Anschlusseinheit 10 insbesondere durch den Montagerahmen 118, und zwar umfasst der Montagerahmen 118, unter anderem, eine Wärmeabführvorrichtung. Daher sind in Figur 12 analoge Teile mit gleichen Bezugszeichen versehen wie in den Figuren 1 bis 11, jedoch vermehrt um die Zahl 100. Die Anschlusseinheit 110 gemäß Figur 12 wird im Folgenden daher nur insoweit beschrieben werden, als sie sich von der Ausführungsformen gemäß Figuren 1 bis 11 unterscheidet, wobei hiermit ansonsten ausdrücklich auf die Beschreibung der Ausführungsformen gemäß Figuren 1 bis 11 verwiesen sei.

Die in Figur 12 dargestellte Anschlusseinheit 110 umfasst ein Gehäuse-Deckelteil 116, welches in der in Figur 12 dargestellten Ausführungsform identisch zu dem Gehäuse-Deckelteil 16 gemäß Figuren 1 bis 11 ausgebildet ist, eine Elektronikbaugruppe 120, welche, insbesondere bezüglich des Formfaktors, ähnlich zu der oben beschriebene Elektronikbaugruppe 20 gemäß Figuren 1 bis 11 ist, eine Gehäuse-Hauptteil 114, welches sich von dem Gehäuse-Hauptteil 14 gemäß Figuren 1 bis 11 durch die Anordnung der Rastmittel unterscheidet, und einen Montagerahmen 118, welcher weiter unten im Detail beschrieben werden wird.

Gemäß der Ausführungsform gemäß Figur 12 ist der Montagerahmen 118 derart ausgebildet, dass er, um an das Gehäuse-Hauptteil 114 montiert zu werden, seitlich auf das Gehäuse-Hauptteil 114 aufgeschoben werden kann. Dementsprechend sind die Rastmittel, welche Laschen 150 und Rastnasen 152 umfassen, im Vergleich zu der Anschlusseinheit 10 gemäß Figuren 1 bis 11 um 90° gedreht.

Der Montagerahmen 118 weist eine Halterung 158 auf, welche sich von einer Basisplatte 156 im Wesentlichen rechtwinklig erstreckt. An der Halterung 158 sind zu den Rastnasen 152 des Gehäuse-Hauptteils 114 passende Vertiefungen 154 vorgesehen. Die Vertiefungen 154 erstrecken sich von einer inneren Fläche der Halterung 158 nach außen, wobei sie durch eine Wandung 158a der Halterung 158 nicht vollständig durchtreten, das heißt, dass die Tiefe der Vertiefungen 154 geringer ist als die Dicke der Wandung 158a.

Der Montagerahmen 118 umfasst ferner eine Wärmeabführvorrichtung. In dem in Figur 12 dargestellten Beispiel ist Wärmeabführvorrichtung aus zwei von der Wandung 158a der Halterung 158 im Wesentlichen rechtwinklig abstehenden Vorsprüngen 178 gebildet. Diese Vorsprünge 178 erstrecken sich dabei im Wesentlichen in die gleiche Richtung, in die der Montagerahmen 118 auf das Gehäuse-Hauptteil 114 aufgeschoben wird (in Figur 12 durch einen Pfeil M dargestellt), wobei sie beim Aufschieben des Montagerahmens 118 auf den Gehäuse-Hauptteil 114 durch Schlitze in dem Gehäuse-Hauptteil 114 durchtreten, so dass die Vorsprünge 178 mit wärmeerzeugenden Bauteilen der Elektronikbaugruppe 120 in Kontakt kommen können. Um eine Kontaktierung der Vorsprünge 178 mit diesen wärmeerzeugenden Bauteilen der Elektronikbaugruppe 120 zu verbessern, sind an der Seite der Vorsprünge 178, die zu den wärmeerzeugenden Bauteilen der Elektronikbaugruppe 120 weist, Wärmeleitpads 180 angeordnet. Die Wärmeleitpads überbrücken einen eventuellen isolierenden Luftspalt zwischen den Vorsprüngen 178 und den wärmeerzeugenden Bauteilen der Elektronikbaugruppe 120.

In der in Figur 12 dargestellten Ausführungsform sind die Vorsprünge 178 unterhalb von wärmeerzeugenden Bauteilen der Elektronikbaugruppe 120 angeordnet, um elektromagnetische Störeffekte zu reduzieren oder zu vermeiden. Die von den Vorsprüngen 178 aufgenommene Wärme wird dann über den gesamten Montagerahmen 118 an die Umgebung weitergeleitet.

Der Montagerahmen 118 umfasst ferner eine Vorrichtung zur elektromagnetischen Abschirmung 182, welche wenigstens ein sogenanntes "EMI-Gasket" umfasst. Die EMI-Gaskets sind, in montiertem Zustand der Anschlusseinheit 110, an den Schlitzen des Gehäuse-Hauptteils 114 gegenüberliegenden Stellen angeordnet, um einen Austritt von elektromagnetischer Strahlung aus dem Gehäuse zu reduzieren.

Ferner ist aus Figur 12 ersichtlich, dass der Montagerahmen 118, im Vergleich zu dem Montagerahmen 18, z.B. gemäß Figur 5, umlaufend geschlossene Befestigungsaussparungen 184 umfasst. Dies dient ebenfalls einer Erhöhung der Stabilität des Montagerahmens 118 gegen Deformation.

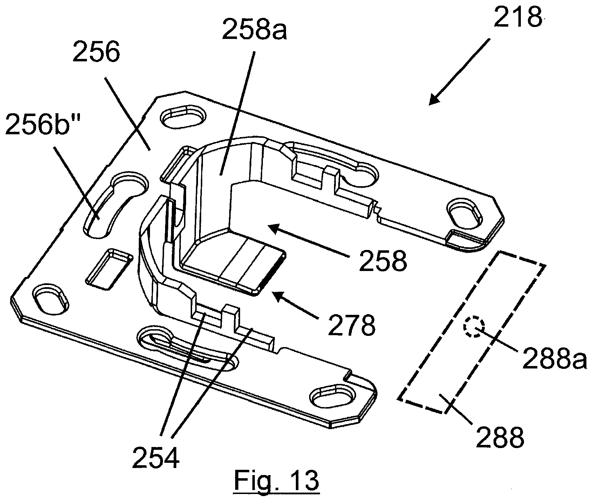

Des Weiteren umfasst der Montagerahmen 118 Aufnahmen 186 für eine (in Fig. 13 gestrichelt dargestellte) Strebe 288. Die Strebe 288 kann mit dem Montagerahmen 118 verbunden werden, um die U-förmige Ausgestaltung des Montagerahmens 118 zu schließen und dadurch die Stabilität des Montagerahmens 118, z.B. gegen Deformation, zu verbessern. In der in Figur 12 dargestellten Ausführungsform des Montagerahmens 118 sind die Aufnahmen 186 als Auflagen ausgebildet. Natürlich können die Aufnahmen 186 optional auch Fixierungsmittel, wie z.B. Rastmittel, oder/und eine Verlagerungsvorrichtung, wie z.B. eine Schwenkvorrichtung, umfassen.

Der Montagerahmen 118 weist ferner Öffnungen 156b', 156b" auf, wobei diese Öffnungen 156b', 156b" zum Durchtritt von (nicht dargestellten) Befestigungsschrauben dienen, mittels derer die Anschlusseinheit 110 an einer (ebenfalls nicht dargestelten) Wandung des Bauwerks befestigt werden kann. Die beiden Öffnungen 156b' können als ein erstes Paar derartiger Öffnungen angesehen werden. Wie in Figur 8 gut erkennbar, können die beiden Öffnungen 156b' des Montagerahmens 118 mit in Figur 8 zueinander horizontal ausgerichteten Befestigungslöchern 62a einer Montagedose 62 (bzw. 60) zur Deckung gebracht werden, so dass durch die Öffnungen 156b' durchgeführte Befestigungsschrauben mit diesen Befestigungslöchern 62a in Eingriff treten können. Weiter ist aus Figur 8 ersichtlich, dass, auf Grund der U-Form des Montagerahmens, nur eines der beiden in Figur 8 zueinander vertikal ausgerichteten Befestigungslöcher 62b der Montagedose 62 (bzw. 60) von dem Montagerahmen überdeckt wird. Die Strebe 288 weist daher ferner eine Durchgangsöffnung 288a auf, welche zusammen mit der Öffnung 156b" des Montagerahmens 118 bzw. der Öffnung 256b" des Montagerahmens 218 ein zweites Paar von Öffnungen bilden kann, so dass die Anschlusseinheit 110 auch dann stabil an der Wandung des Bauwerks befestigt werden kann, wenn nur die zueinander vertikal ausgerichteten Befestigungslöcher 62b der Montagedose 62 (bzw. 60) für eine Anbringung der Anschlusseinheit 110 zur Verfügung stehen.

Der in Figur 13 dargestellte Montagerahmen 218 unterscheidet sich von dem in Figur 12 dargestellten Ausführungsbeispiel des Montagerahmens 118 insbesondere durch die Halterungs-Anordnung, und zwar unterscheidet sich der Montagerahmen 218 insbesondere in der Anordnung der Basisplatte des Montagerahmens in Relation zu den Rastmitteln des Montagerahmens und/oder der Wärmeabführvorrichtung des Montagerahmens. Daher sind in Figur 13 analoge Teile mit gleichen Bezugszeichen versehen wie in Figur 12, jedoch vermehrt um die Zahl 100. Der Montagerahmen 218 gemäß Figur 13 wird im Folgenden daher nur insoweit beschrieben werden, als er sich von der Ausführungsform gemäß Figur 12 unterscheidet, wobei hiermit ansonsten ausdrücklich auf die Beschreibung der Ausführungsform gemäß Figur 12 verwiesen sei.

Der Montagerahmen 218 umfasst eine Basisplatte 256 und eine Halterung 258. Im Vergleich zu der Ausführungsform des Montagerahmens 118 aus Figur 12, ist die Basisplatte 256 jedoch nicht bündig mit einem Rand der Halterung angeordnet. Die Basisplatte 256 ist in der in Figur 13 gezeigten Ausführungsform entlang einer Wandung 258a der Halterung 258 nach unten verlagert angeordnet. Die Halterung 258 umfasst ferner Rastmittel 254 und eine Wärmeabführvorrichtung 278. Der Abstand zwischen den Rastmitteln 254 und der Wärmeabführvorrichtung 278 ist im Wesentlichen identisch zu dem Abstand zwischen den Rastmitteln 154 und der Wärmeabführvorrichtung 178 des Montagerahmens 118 aus Figur 12. Somit kann eine Gehäuse 12 entweder mit dem Montagerahmen 118 oder mit dem Montagerahmen 218 verbunden werden. Bei einer Montage der Anschlusseinheit in einer Wand, ragt das Gehäuse 12, aufgrund der unterschiedlichen Anbringungshöhen der Basisplatten 156, 256 der Montagerahmen 118, 218 relativ zu den Rastmitteln 154, 254 der Montagerahmen 118, 218, entsprechend dem verwendeten Montagerahmen 118, 218 unterschiedlich tief in die Wand hinein bzw. aus dieser heraus.

## Patentansprüche

1. Zur Montage in einem Montagevolumen vorbestimmter Größe eines Bauwerks geeignete Anschlusseinheit (10), umfassend:
• ein zur Aufnahme wenigstens eines Teils der Funktionselemente der Anschlusseinheit (10) bestimmtes und als Gehäusetopf mit einer Topföffnung (27), einer umlaufenden Topfseitenwandung (28) und einem Topfboden (30) ausgebildetes Gehäuse (12), und
• einen Montagerahmen (18) mit einer im Wesentlichen planaren Basisplatte (56), mittels derer die Anschlusseinheit (10) an einer Fläche des Bauwerks befestigbar ist,
wobei der Gehäusetopf ein Gehäuse-Hauptteil (14) und ein Gehäuse-Deckelteil (16) umfasst, welche miteinander verbindbar sind, wobei die Trennlinie (34) zwischen Gehäuse-Hauptteil (14) und Gehäuse-Deckelteil (16) von einem ersten Randabschnitt der Topföffnung (27) ausgeht, durch einen ersten Abschnitt der Topfseitenwandung (28), anschließend durch den Topfboden (30) und weiter anschließend durch einen zweiten Abschnitt der Topfseitenwandung (28) verläuft und in einem zweiten Randabschnitt der Topföffnung (27) endet, **dadurch gekennzeichnet, dass** an dem Gehäuse-Hauptteil (14) wenigstens ein Paar von zur Trennlinie (34) im Wesentlichen orthogonal verlaufenden Führungsschienen (44-1, 44-2, 44-3) zum Führen einer Platine (42-1, 42-2, 42-3) oder einer Mehrzahl von Platinen (42-1, 42-2, 42-3) einer Elektronikbaugruppe (20) der Anschlusseinheit (10) vorgesehen ist.

2. Anschlusseinheit nach Anspruch 1,
**dadurch gekennzeichnet, dass** der dem Gehäuse-Deckelteil (16) angehörende Abschnitt des die Topföffnung (27) begrenzenden Topfrands (26) zumindest abschnittsweise zumindest auf Höhe, vorzugsweise oberhalb, der Führungsschiene (44-1, 44-2, 44-3) bzw. der der Topföffnung (27) nächstgelegenen Führungsschiene (44-1) verläuft.

3. Anschlusseinheit nach Anspruch 1 oder 2,
**dadurch gekennzeichnet, dass** das Gehäuse-Hauptteil (14) und das Gehäuse-Deckelteil (16) lösbar aneinander befestigbar, beispielsweise miteinander verrastbar, sind.

4. Anschlusseinheit nach einem der Ansprüche 1 bis 3,
**dadurch gekennzeichnet, dass** von einem der beiden Teile, nämlich dem Gehäuse-Deckelteil oder dem Gehäuse-Hauptteil, vorzugsweise dem Gehäuse-Deckelteil (16), wenigstens ein Steg (36) absteht, der im aneinander befestigten Zustand von Gehäuse-Hauptteil (14) und Gehäuse-Deckelteil (16) einem Abschnitt der Seitenwandung (28) des jeweils anderen der beiden Teile, nämlich des Gehäuse-Hauptteils oder dem Gehäuse-Deckelteils, vorzugsweise des Gehäuse-Hauptteils (14), gegenüberliegt, vorzugsweise an diesem flächig anliegt, wobei an dem wenigstens einen Steg (36) und dem diesem zugeordneten Seitenwandungsabschnitt (28) miteinander zusammenwirkende Rastmittel (36c, 40) ausgebildet sind.

5. Anschlusseinheit nach Anspruch 4,
**dadurch gekennzeichnet, dass** der wenigstens eine Steg (36) des einen Teils (16), Gehäuse-Deckelteil oder Gehäuse-Hauptteil, im aneinander befestigten Zustand von Gehäuse-Hauptteil (14) und Gehäuse-Deckelteil (16) zumindest mit einem Teil seiner Länge in eine Halterungstasche (38) eingeführt ist, welche an dem Wandungsabschnitt (28) des jeweils anderen Teils (16), Gehäuse-Hauptteil oder Gehäuse-Deckelteil, vorgesehen ist.

6. Anschlusseinheit nach Anspruch 5,
**dadurch gekennzeichnet, dass** die Halterungstasche (38) von einem Teil des Seitenwandungsabschnitts (28), dem der Steg (36) gegenüberliegt, zwei der Führungsschienen (44-2, 44-3) für die Elektronikbaugruppe (20) und einer zum Seitenwandungsabschnitt (28) parallel verlaufenden Wandung (46) umgrenzt ist.

7. Anschlusseinheit nach einem der Ansprüche 1 bis 6,
**dadurch gekennzeichnet, dass** der Montagerahmen (18) als von dem Gehäuse (12) gesondert ausgebildetes, mit diesem lösbar verbindbares Bauteil ausgebildet ist,
wobei der Montagerahmen (18) eine Basisplatte (56) umfasst, welche dazu bestimmt ist, im montierten Zustand der Anschlusseinheit (10) zur Wand des Bauwerks im Wesentlichen parallel zu verlaufen, sowie eine mit der Basisplatte (56) einstückig ausgebildete und von der Basisplatte (56) abstehende Halterung (58), mittels derer der Montagerahmen (18) mit dem Gehäuse (18) verbindbar, vorzugsweise lösbar verbindbar, beispielsweise verrastbar, ist.

8. Anschlusseinheit nach Anspruch 7,
**dadurch gekennzeichnet, dass** der Montagerahmen (18) wenigstens eine Rastausnehmung (54) umfasst, welche vorzugsweise als Vertiefung ausgebildet ist.

9. Anschlusseinheit nach Anspruch 7 oder 8,
**dadurch gekennzeichnet, dass** die Halterung (58) derart ausgebildet ist, dass der Montagerahmen (18) mit dem Gehäuse (12) sowohl dann lösbar verbindbar ist, wenn er derart orientiert ist, dass die Halterung (58) auf derjenigen Seite der Basisplatte (56) angeordnet ist, die vom Gehäuse (12) weg weist, als auch dann, wenn er derart orientiert ist, dass die Halterung (58) auf derjenigen Seite der Basisplatte (56) angeordnet ist, die auf das Gehäuse (12) zu weist.

10. Anschlusseinheit nach einem der Ansprüche 7 bis 9,
**dadurch gekennzeichnet, dass** wenigstens einer der Stege (56"a) der Basisplatte (56") schmaler ausgebildet ist als ein auf der entgegengesetzten Seite der Topföffnung (27) vorgesehener Steg (56"a).

11. Anschlusseinheit nach einem der Ansprüche 7 bis 10,
**dadurch gekennzeichnet, dass** die Basisplatte (56) im Wesentlichen U-förmig ausgebildet ist.

12. Anschlusseinheit nach einem der Ansprüche 7 bis 11,
**dadurch gekennzeichnet, dass** der Montagerahmen eine Wärmeabführvorrichtung umfasst, welche in montiertem Zustand des Montagerahmens (18) mit wenigstens einem wärmeerzeugenden Bauteil der Elektronikbaugruppe (20) der Anschlusseinheit (10) in wärmeübertragendem Kontakt steht, vorzugsweise unter Verwendung eines Zwischenelements, insbesondere eines Wärmeleitpads.

13. Anschlusseinheit nach einem der vorhergehenden Ansprüche, **dadurch gekennzeichnet, dass** die Anschlusseinheit (10), insbesondere der Montagerahmen (18), eine Vorrichtung zur elektromagnetischen Abschirmung umfasst.

14. Anschlusseinheit nach einem der vorhergehenden Ansprüche, **dadurch gekennzeichnet, dass** an der Außenseite des Gehäuses (12) oder/und an dem Montagerahmen (18) wenigstens eine Befestigungstelle (76) für eine außerhalb des Gehäuses (12) angeordnete Funktionseinheit vorgesehen ist.

## Claims

1. Connection unit (10) suitable for mounting in a mounting volume of a predetermined size of a building, comprising:
• a housing (12) intended to receive at least some of the functional elements of the connection unit (10) and designed as a housing pot having a pot opening (27), a peripheral pot side wall (28) and a pot base (30), and
• a mounting frame (18) having a substantially planar base plate (56) by means of which the connection unit (10) can be attached to a surface of the building,
the housing pot comprising a housing main part (14) and a housing cover part (16) which can be interconnected, the line of separation (34) between the housing main part (14) and the housing cover part (16) extending from a first edge portion of the pot opening (27), through a first portion of the pot side wall (28), then through the pot base (30) and then further through a second portion of the pot side wall (28) and ending in a second edge portion of the pot opening (27), **characterised in that** at least one pair of guide rails (44-1, 44-2, 44-3) which extend substantially orthogonally to the line of separation (34) are provided on the housing main part (14) for guiding a printed circuit board (42-1, 42-2, 42-3) or a plurality of printed circuit boards (42-1,42-2, 42-3) of an electronic assembly (20) of the connection unit (10).

2. Connection unit according to claim 1, **characterised in that** the portion of the pot edge (26) belonging to the housing cover part (16), which edge defines the pot opening (27), extends at least in portions at least to the height of, preferably above the guide rail (44-1, 44-2, 44-3), more specifically the guide rail (44-1) nearest to the pot opening (27).

3. Connection unit according to either claim 1 or claim 2, **characterised in that** the housing main part (14) and the housing cover part (16) can be detachably fastened to one other, for example can be latched together.

4. Connection unit according to any of claims 1 to 3, **characterised in that** at least one projection (36) protrudes from one of the two parts, specifically from the housing cover part or from the housing main part, preferably the housing cover part (16), which projection, when the housing main part (14) and the housing cover part (16) are in the mutually attached state, faces a portion of the side wall (28) of the other of the two parts, specifically of the housing main part or of the housing cover part, preferably of the housing main part (14), and is preferably flush with this surface, cooperating latching means (36c, 40) being formed on the at least one projection (36) and the side wall portion (28) associated therewith.

5. Connection unit according to claim 4, **characterised in that**, in the mutually attached state of the housing main part (14) and the housing cover part (16), at least part of the length of the at least one projection (36) of the one part (16) (housing cover part or housing main part) is inserted into a holding pocket (38) which is provided on the wall portion (28) of the relevant other part (16) (housing main part or housing cover part).

6. Connection unit according to claim 5, **characterised in that** the holding pocket (38) is delimited by a part of the side wall portion (28) that faces the projection (36), two of the guide rails (44-2, 44-3) for the electronic assembly (20), and a wall (46) which extends in parallel with the side wall portion (28).

7. Connection unit according to any of claims 1 to 6, **characterised in that** the mounting frame (18) is formed as a component which is formed separately from the housing (12) and is releasably connectable thereto, the mounting frame (18) comprising a base plate (56) which is intended to extend substantially in parallel with the wall of the building when the connection unit (10) is in the mounted state, and comprising a mount (58), which is integrally formed with the base plate (56) and protrudes from the base plate (56), by means of which mount the mounting frame (18) is connectable to the housing (18), preferably releasably connectable, for example, by means of latching.

8. Connection unit according to claim 7, **characterised in that** the mounting frame (18) comprises at least one latching recess (54), which is preferably formed as an indentation.

9. Connection unit according to either claim 7 or claim 8, **characterised in that** the mount (58) is designed such that the mounting frame (18) is detachably connectable to the housing (12), both when said frame is oriented such that the mount (58) is arranged on the face of the base plate (56) that faces away from the housing (12), as well as when said frame is oriented such that the mount (58) is arranged on the face of the base plate (56) that faces towards the housing (12).

10. Connection unit according to any of claims 7 to 9, **characterised in that** at least one of the projections (56"a) of the base plate (56") is narrower than a projection (56"a) provided on the opposite side of the pot opening (27).

11. Connection unit according to any of claims 7 to 10, **characterised in that** the base plate (56) is substantially U-shaped.

12. Connection unit according to any of claims 7 to 11, **characterised in that** the mounting frame comprises a heat dissipation device, which, when the mounting frame (18) is in the mounted state, is in heat-transferring contact with at least one heat-generating component of the electronic assembly (20) of the connection unit (10), preferably using an intermediate element, in particular a heat-conducting pad.

13. Connection unit according to any of the preceding claims, **characterised in that** the connection unit (10), in particular the mounting frame (18), comprises a device for electromagnetic shielding.

14. Connection unit according to any of the preceding claims, **characterised in that** at least one attachment point (76) is provided on the outer face of the housing (12) and/or on the mounting frame (18), which point is for a functional unit arranged outside the housing (12).

## Revendications

1. Unité de raccordement (10) adaptée au montage dans un volume de montage de taille prédéterminée d'une construction, comprenant :
- un boîtier (12) destiné à recevoir au moins une partie des éléments fonctionnels de l'unité de raccordement (10) et réalisé en tant que pot de boîtier avec une ouverture de pot (27), une paroi latérale de pot (28) circonférentielle et un fond de pot (30), et
- un cadre de montage (18) avec une plaque de base (56) sensiblement plane, au moyen de laquelle l'unité de raccordement (10) peut être fixée à une surface de la construction,
dans laquelle le pot de boîtier comprend une partie principale de boîtier (14) et une partie de couvercle de boîtier (16), lesquelles peuvent être reliées l'une à l'autre, dans laquelle la ligne de séparation (34) entre la partie principale de boîtier (14) et la partie de couvercle de boîtier (16) part d'une première section de bord de l'ouverture de pot (27), s'étend par une première section de la paroi latérale de pot (28), ensuite par le fond de pot (30) puis par une deuxième section de la paroi latérale de pot (28) et se termine dans une deuxième section de bord de l'ouverture de pot (27), **caractérisée en ce qu'**au moins une paire de rails de guidage (44-1, 44-2, 44-3) s'étendant sensiblement orthogonalement à la ligne de séparation (34) est prévue au niveau de la partie principale de boîtier (14) pour le guidage d'une carte de circuit imprimé (42-1, 42-2, 42-3) ou d'une pluralité de cartes de circuit imprimé (42-1, 42-2, 42-3) d'un module électronique (20) de l'unité de raccordement (10).

2. Unité de raccordement selon la revendication 1,
**caractérisée en ce que** la section appartenant à la partie de couvercle de boîtier (16) du bord de pot (26) délimitant l'ouverture de pot (27) s'étend au moins par endroits au moins à hauteur, de préférence au-dessus, du rail de guidage (44-1, 44-2, 44-3) ou du rail de guidage (44-1) le plus proche de l'ouverture de pot (27).

3. Unité de raccordement selon la revendication 1 ou 2,
**caractérisée en ce que** la partie principale de boîtier (14) et la partie de couvercle de boîtier (16) peuvent être fixées l'une à l'autre de manière amovible, par exemple encliquetées l'une avec l'autre.

4. Unité de raccordement selon l'une quelconque des revendications 1 à 3, **caractérisée en ce qu'**au moins une entretoise (36) fait saillie d'une des deux parties, à savoir la partie de couvercle de boîtier ou la partie principale de boîtier, de préférence la partie de couvercle de boîtier (16), qui fait face, à l'état fixé l'une à l'autre de la partie principale de boîtier (14) et de la partie de couvercle de boîtier (16), à une section de la paroi latérale (28) de respectivement l'autre des deux parties, à savoir de la partie principale de boîtier ou de la partie de couvercle de boîtier, de préférence de la partie principale de boîtier (14), de préférence s'applique à plat contre celle-ci, dans laquelle des moyens d'encliquetage (36c, 40) coopérant l'un avec l'autre sont réalisés au niveau de l'au moins une entretoise (36) et de la section de paroi latérale (28) associée à celle-ci.

5. Unité de raccordement selon la revendication 4,
**caractérisée en ce que** l'au moins une entretoise (36) de l'une partie (16), partie de couvercle de boîtier ou partie principale de boîtier, à l'état fixé l'une à l'autre de la partie principale de boîtier (14) et de la partie de couvercle de boîtier (16), est introduite au moins avec une partie de sa longueur dans une poche de retenue (38), laquelle est prévue au niveau de la section de paroi (28) de respectivement l'autre partie (16), partie principale de boîtier ou partie de couvercle de boîtier.

6. Unité de raccordement selon la revendication 5,
**caractérisée en ce que** la poche de retenue (38) est délimitée par une partie de la section de paroi latérale (28), à laquelle l'entretoise (36) fait face, deux des rails de guidage (44-2, 44-3) pour le module électronique (20) et une paroi (46) s'étendant parallèlement à la section de paroi latérale (28).

7. Unité de raccordement selon l'une quelconque des revendications 1 à 6, **caractérisée en ce que** le cadre de montage (18) est réalisé en tant que composant réalisé séparément du boîtier (12), pouvant être relié de manière amovible à celui-ci, dans laquelle le cadre de montage (18) comprend une plaque de base (56), laquelle est destinée à s'étendre à l'état monté de l'unité de raccordement (10) sensiblement parallèlement à la paroi de la construction, ainsi qu'une fixation (58) réalisée d'un seul tenant avec la plaque de base (56) et faisant saillie de la plaque de base (56), au moyen de laquelle le cadre de montage (18) peut être relié, de préférence relié de manière amovible, par exemple encliqueté, avec le boîtier (18).

8. Unité de raccordement selon la revendication 7,
**caractérisée en ce que** le cadre de montage (18) comprend au moins un évidement d'encliquetage (54), lequel est réalisé de préférence en tant que renfoncement.

9. Unité de raccordement selon la revendication 7 ou 8,
**caractérisée en ce que** la fixation (58) est réalisée de sorte que le cadre de montage (18) puisse être relié de manière amovible au boîtier (12) aussi bien lorsqu'il est orienté de sorte que la fixation (58) soit disposée sur le côté de la plaque de base (56), qui est opposé au boîtier (12), que lorsqu'il est orienté de sorte que la fixation (58) soit disposée sur le côté de la plaque de base (56), qui est tourné vers le boîtier (12).

10. Unité de raccordement selon l'une quelconque des revendications 7 à 9, **caractérisée en ce qu'**au moins une des entretoises (56"a) de la plaque de base (56") est réalisée plus étroite qu'une entretoise (56"a) prévue sur le côté opposé de l'ouverture de pot (27).

11. Unité de raccordement selon l'une quelconque des revendications 7 à 10, **caractérisée en ce que** la plaque de base (56) est réalisée sensiblement en forme de U.

12. Unité de raccordement selon l'une quelconque des revendications 7 à 11, **caractérisée en ce que** le cadre de montage comprend un dispositif d'évacuation de chaleur, lequel est en contact caloporteur à l'état monté du cadre de montage (18) avec au moins un composant générant de la chaleur du module électronique (20) de l'unité de raccordement (10), de préférence en utilisant un élément intermédiaire, en particulier un pad thermique.

13. Unité de raccordement selon l'une quelconque des revendications précédentes, **caractérisée en ce que** l'unité de raccordement (10), en particulier le cadre de montage (18), comprend un dispositif de blindage électromagnétique.

14. Unité de raccordement selon l'une quelconque des revendications précédentes, **caractérisée en ce qu'**au moins un point de fixation (76) est prévu pour une unité fonctionnelle disposée à l'extérieur du boîtier (12) sur le côté extérieur du boîtier (12) ou/et au niveau du cadre de montage (18).
